Europäisches Patentamt

European Patent Office

Office européen des brevets

(19)

(11) **EP 1 103 907 A2**

(12) **EUROPÄISCHE PATENTANMELDUNG**

(43) Veröffentlichungstag:
**30.05.2001 Patentblatt 2001/22**

(51) Int Cl.⁷: **G06F 17/60**

(21) Anmeldenummer: **00109252.7**

(22) Anmeldetag: **28.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **25.11.1999 DE 19957828**

(71) Anmelder: **Hauck, Michael**
**10719 Berlin (DE)**

(72) Erfinder: **Hauck, Michael**
**10719 Berlin (DE)**

(74) Vertreter: **Liesegang, Eva**
**Forrester & Boehmert,**
**Franz-Joseph-Strasse 38**
**80801 München (DE)**

(54) **Verfahren zum Ausgeben mehrerer Grafiken oder mehrerer Multimediadatensätze**

(57) Die Erfindung bezieht sich auf ein Verfahren zum automatischen Ausgeben von mehreren Grafiken (21) oder mehreren Multimediadatensätzen, die in einer Datenbank (31) gespeichert sind, mittels wenigstens eines Benutzer-Computers (1), der mit einem die Datenbank (31) umfassenden Computer-Netzwerk (5) so verbunden ist, daß zwischen dem wenigstens einen Benutzer-Computer (1) und dem Computer-Netzwerk (5) Daten elektronisch ausgetauscht werden können. Eine Rangfolge der mehreren Grafiken (21) oder der mehreren Multimediadatensätze bei der Ausgabe mittels des wenigstens einen Benutzer-Computers (1) wird in Abhängigkeit von elektronisch erfaßten Zählparametern automatisch bestimmt.

Fig. 1

**Beschreibung**

Die Erfindung betrifft ein Verfahren zum automatischen Ausgeben mehrerer Grafiken oder mehrerer Multimediadatensätze, die in einer Datenbank elektronisch gespeichert sind, mittels wenigstens eines Benutzer-Computers, der mit einem die Datenbank umfassenden Computer-Netzwerk so verbunden ist, daß zwischen dem wenigstens einen Benutzer-Computer und dem Computer-Netzwerk Daten elektronisch ausgetauscht werden können.

Hintergrund der Erfindung

Die vielfältigen Formen der Verbreitung von Informationen an eine große Anzahl von Personen und der Darstellung der verbreiteten Informationen beinhalten die Nutzung von Computern. Die Informationen können Bild- und Toninformationen umfassen und werden in diesem Fall auch als Multimediainformationen bzw. -datensätze bezeichnet. Die Bild- und Toninformationen können mit Hilfe eines Speichermediums, das von dem Computer gelesen werden kann, oder mit Hilfe der Übertragung von Datenpaketen über ein Netzwerk, an welches der Computer angeschlossen ist, dem Computer zur Verfügung gestellt werden. Die darzustellenden Informationen umfassen hierbei beispielsweise Verbraucherinformationen, Produktinformationen, technische Informationen oder Werbung.

Eine Möglichkeit zur schnellen Informationsverbreitung bilden Computer-Netzwerke, beispielsweise das Internet. Die Informationsübertragung mit Hilfe von Computer-Netzwerken stellt eine kostengünstige Möglichkeit zur Übertragung einer großen Menge von Informationen an eine Vielzahl von Personen dar. Diese Vorteile möchten möglichst viele Anbieter von Informationen nutzen, um ihre eigenen Informationen an Empfänger zu vertreiben, d.h. an Benutzer von Computern, die an das Computer-Netzwerk angeschlossen sind. Hierbei ergibt sich das Problem, daß die übermittelten Informationen bei den Empfängern kaum Interesse wecken oder überhaupt nicht wahrgenommen werden, weil die Empfänger einer großen Anzahl derartiger Information gegenüberstehen. Ein Beispiel hierfür sind die im Internet üblichen Bannergrafiken. Die Benutzer des Internets haben sich an diese Bannergrafiken gewöhnt und schenken ihnen kaum Beachtung, insbesondere wenn die Bannergrafiken Werbung enthalten. Im Extremfall werden die Bannergrafiken von den Benutzern auf dem Bildschirm des Computers ausgeblendet.

Erfindung

Der Erfindung liegt die Aufgabe zugrunde, ein Verfahren zum automatischen Ausgeben von Bild-, Text- und/oder Toninformationen mit Hilfe eines mit einer Datenbank verbundenen Benutzer-Computers zu schaffen, welches es ermöglicht, die Ausgabe der Bild-, Text- und/oder Toninformationen über den Benutzer-Computer automatisch so zu gestalten, daß ein Benutzer des Benutzer-Computers eine ausreichende Möglichkeit zur Wahrnehmung der Bild-, Text- und/oder Toninformationen hat, und die Wahrnehmung der Bild-, Text- und/oder Toninformationen durch den Benutzer erleichtert wird.

Gemäß einem Aspekt der Erfindung ist ein Verfahren zum automatischen Darstellen mehrerer Grafiken, die in einer Datenbank elektronisch gespeichert sind, auf einem Bildschirm wenigstens eines Benutzer-Computers geschaffen, der mit einem die Datenbank umfassenden Computer-Netzwerk so verbunden ist, daß zwischen dem wenigstens einen Benutzer-Computer und dem Computer-Netzwerk Daten elektronisch ausgetauscht werden können, wobei die mehreren Grafiken bei der Darstellung auf dem Bildschirm jeweils ein erstes Auswahlfeld umfassen und für die mehreren Grafiken jeweils ein von mindestens einem Zählparameter abhängiger Zählstand elektronisch erfaßt und in der Datenbank elektronisch gespeichert wird, das Verfahren die folgenden Verfahrensschritte umfassend:

    a) elektronisches Auswählen der mehreren Grafiken aus in der Datenbank elektronisch gespeicherten Grafiken;
    b) elektronisches Bestimmen einer jeweiligen Höhe des elektronisch erfaßten Zählstands der mehreren Grafiken als Funktion des mindestens einen Zählparameters;
    c) elektronisches Bestimmen einer ersten Rangfolge der mehreren Grafiken in Abhängigkeit von der jeweiligen Höhe des elektronisch erfaßten Zählstands der mehreren Grafiken;
    d) elektronisches Bereitstellen der mehreren Grafiken entsprechend der ersten Rangfolge an dem wenigstens einen Benutzer-Computer, so daß die mehreren Grafiken auf einem Bildschirm des wenigstens einen Benutzer-Computers der ersten Rangfolge entsprechend elektronisch darstellbar sind;
    e) elektronisches Darstellen mehrerer der gemäß d) bereitgestellten Grafiken der ersten Rangfolge entsprechend;
    f) elektronisches Erfassen einer Auswahl mindestens einer der gemäß e) dargestellten Grafiken durch einen Benutzer, welcher die mindestens eine der gemäß e) dargestellten Grafiken durch Betätigen des ersten Auswahlfelds mit Hilfe von Auswahlmitteln des wenigstens einen Benutzer-Computers auswählt; und
    g) elektronisches Anpassen des mindestens einen Zählparameters für wenigstens eine oder alle der gemäß d) bereitgestellten Grafiken in Abhängigkeit von der elektronisch erfaßten Auswahl des Benutzers.

Nach einem weiteren Aspekt der Erfindung ist ein Verfahren zum automatischen Ausgeben von mehreren Multimediadatensätzen, insbesondere von Bild-, Text- und/oder Tondatensätzen, die in einer Datenbank elektronisch gespeichert sind, mit Hilfe wenigstens eines Benutzer-Computers geschaffen, der mit einem die Datenbank umfassenden Computer-Netzwerk so verbunden ist, daß zwischen dem wenigstens einen Benutzer-Computer und dem Computer-Netzwerk Daten elektronisch ausgetauscht werden können, wobei beim Ausgeben der mehreren Multimediadatensätze jeweils mehrere Bewertungsfelder auf einem Bildschirm des wenigstens einen Benutzer-Computer angezeigt werden, den Bewertungsfeldern jeweils ein Zahlenwert in der Datenbank elektronisch zugeordnet ist und für die mehreren Multimediadatensätze jeweils ein von mindestens einem Summenzählparameter abhängiger Summenzählstand elektronisch erfaßt und in der Datenbank elektronisch gespeichert wird, das Verfahren die folgenden Verfahrensschritte umfassend:

a) elektronisches Auswählen der mehreren Multimediadatensätze aus in der Datenbank elektronisch gespeicherten Multimediadatensätzen;
b) elektronisches Bestimmen einer jeweiligen Höhe des elektronisch erfaßten Summenzählstands der mehreren Multimediadatensätzen als Funktion des mindestens einen Summenzählparameters;
c) elektronisches Bestimmen einer ersten Rangfolge der mehreren Multimediadatensätze in Abhängigkeit von der jeweiligen Höhe des elektronisch bestimmten Summenzählstands der mehreren Multimediadatensätze;
d) elektronisches Bereitstellen der mehreren Multimediadatensätze entsprechend der ersten Rangfolge an dem wenigstens einen Benutzer-Computer, so daß die mehreren Multimediadatensätze mit Hilfe des wenigstens einen Benutzer-Computers der ersten Rangfolge entsprechend elektronisch ausgegeben werden können;
e) elektronisches Ausgeben mehrerer der gemäß d) bereitgestellten Multimediadatensätze der ersten Rangfolge entsprechend;
f) elektronisches Erfassen einer Auswahl eines der Bewertungsfelder für wenigstens einen der gemäß e) ausgegebenen Multimediadatensätze durch einen Benutzer, welcher das eine der Bewertungsfelder mit Hilfe von Auswahlmittel des wenigstens einen Benutzer-Computers auswählt; und
g) elektronisches Anpassen des mindestens einen Summenzählparameters für den wenigstens einen Multimediadatensatz, für den der Benutzer gemäß f) eine Auswahl getroffen hat, in Abhängigkeit von dem Zahlenwert, der dem einen gemäß f) ausgewählten Bewertungsfeld zugeordnet ist.

Der wesentliche Vorteil, welcher mit der Erfindung gegenüber dem Stand der Technik erreicht ist, besteht darin, daß die Reihenfolge der Ausgabe von Informationen in Form von Bild-, Text-und/oder Tondaten, wie beispielsweise technische Informationen, Umfragen, Werbungen oder Produktinformationen fortlaufend in Abhängigkeit von der elektronisch erfaßten Reaktion der Empfänger der Information automatisch angepaßt und aktualisiert wird. Es können verschiedene Zählparameter gewählt werden, um den Einfluß der tatsächlichen Wahrnehmung der übermittelten Information bei den Computernutzern, die anhand der Auswahl bzw. der Bewertung elektronisch erfaßt wird, bei der Bereitstellung und Ausgabe der jeweiligen Informationen unter Heranziehung der elektronisch gespeicherten Erfassungsdaten automatisch zu berücksichtigen.
Vorteilhafte Weiterbildungen der Erfindung sind in den jeweiligen Unteransprüchen offenbart.

Zeichnung

Die Erfindung wird im folgenden anhand eines Ausführungsbeispiels unter Bezugnahme auf eine Zeichnung näher erläutert. Hierbei zeigen:

Figur 1    eine schematische Darstellung eines Computer-Netzwerks;

Figur 2    eine Oberfläche eines Bildschirms eines Benutzer-Computers;

Figur 3    eine Blockdiagramm zur Beschreibung des Verfahrens zum automatischen Darstellen von Graphiken;

Figur 4    ein Blockdiagramm zum Ablauf einer Quiz-Runde;

Figur 5    ein Blockdiagramm zur Verwaltung von Informationsgrafiken;

Figur 6    ein Blockdiagramm einer weiteren Ausführungsform, wobei die Rangfolge von Multimediadatensätzen in Abhängigkeit von Bewertungen der Multimediadatensätze berechnet wird: und

Figur 7    eine schematische Darstellung der Verwaltung der Multimediadatensätze bei der Ausführungsform gemäß Figur 6.

Ausführungsbeispiele

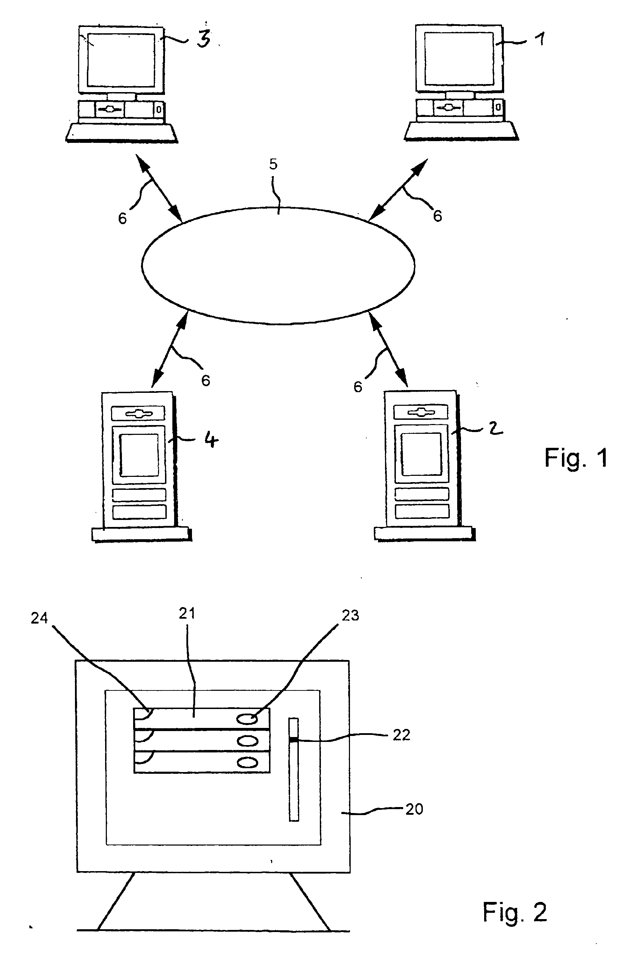

Gemäß Figur 1 sind ein Benutzer-Computer 1, ein Datenbank-Computer 2, ein Anbieter-Computer 3 und ein Informations-Computer 4 mit einem Netzwerk 5 verbunden, so daß über jeweilige Verbindungen 6 Daten zwischen dem Netzwerk 5 und den einzelnen Computern und zwischen den einzelnen Computern ausgetauscht werden können. Das Netzwerk 5 kann als ein beliebiges Computernetzwerk, beispielsweise als das Internet ausgebildet sein.

Es kann vorgesehen sein, daß die Funktionen des Datenbank-Computers 2 und des Informations-Computers 4 von einem einzigen Computer, beispielsweise einem Server übernommen werden, so daß der Datenbank-Computer 2 und den Informations-Computer 4 in den einzigen Computer integriert sind.

Generell können die einzelnen Computer jeweils Funktionen der anderen Computer ganz oder teilweise übernehemen. So kann beispielsweise vorgesehen sein, daß der Datenbank-Computer 2, der Anbieter-Computer 3 und der Informations-Computer 4 jeweils auch als Benutzer-Computer nutzbar sind.

Gemäß Figur 2 sind auf einem Bildschirm 20 des Benutzer-Computers 1 mehrere Informationsgrafiken 21 dargestellt. Die Informationsgrafiken 21 im Sinne der vorliegenden Anmeldung umfassen jegliche Art der grafischen Darstellung auf einem Bildschirm eines Computers. Die Informationsgrafiken 21 können Text- und Bildelemente. Es kann sich um reine Text- oder reine Bilddarstellungen handeln. Hierbei können die Informationsgrafiken bewegte Bilder (Filme) umfassen.

Die in den Informationsgrafiken 21 dargestellten Informationen können beliebige Sachgebiete und -themen betreffen, insbesondere technische Informationen, Verbraucherinformationen oder Werbung. Bei Werbung handelt es sich beispielsweise um im Internet übliche Bannergrafiken.

Die Informationsgrafiken 21 sind nacheinander in einer bestimmten Reihenfolge dargestellt, die einer vor der Darstellung auf dem Bildschirm 20 ermittelten bzw. berechneten Rangfolge der Informationsgrafiken 21 entspricht. Mittels des Verschiebens einer Markierung 22, die ebenfalls auf dem Bildschirm 20 dargestellt ist, kann die Darstellung der Informationsgrafiken 21 so verändert werden, daß weitere Informationsgrafiken dargestellt werden, die in der Rangfolge oberhalb oder unterhalb der auf dem Bildschirm 20 in Figur 2 dargestellten Informationsgrafiken 21 angeordnet sind, und deshalb momentan nicht auf dem Bildschirm 20 zu sehen sind.

Die Darstellung der Informationsgrafiken kann auch in der Art erfolgen, daß zwischen den Informationsgrafiken seitenweise vor und zurück geblättert werden kann. Zu diesem Zweck bedient der Benutzer die Tastatur oder betätigt einen Button (nicht dargestellt) auf dem Bildschirm 20.

Die Informationsgrafiken 21 sind in einer Datenbank des Datenbank-Computers 2 gespeichert und werden von dem Datenbank-Computer 2 an den Benutzer-Computer 1 übermittelt. Die Rangfolge der Informationsgrafiken 21 wird mit Hilfe des Datenbank-Computers 2 elektronisch berechnet. Nach der elektronischen Übermittlung der Informationsgrafiken 21 an den Benutzer-Computer 1 werden die Informationsgrafiken 21 auf dem Bildschirm 20 der vorher berechneten Rangfolge entsprechend dargestellt. Bei der Berechnung der Rangfolge können verschieden Parameter automatisch berücksichtigt werden.

Bei einer ersten Ausführungsform wird die Rangfolge auf der Basis eines Zählstands berechnet, der den Informationsgrafiken 21 jeweils automatisch zugeordnet und in der Datenbank des Datenbank-Computers 2 gespeichert ist. Der Zählstand einer bestimmten Informationsgrafik entspricht der Häufigkeit, mit der die bestimmte Informationsgrafik von Benutzern ausgewählt wurde. Der Benutzer des Benutzer-Computers 1 kann aus den dargestellten Informationsgrafiken 21 eine oder mehrere Informationsgrafiken dadurch auswählen, daß ein erstes Auswahlfeld 23 betätigt wird. Dies geschieht mit Hilfe von Auswahlmitteln des Benutzer-Computers 1, beispielsweise mittels einer Maus oder einer Tatstatur (nicht dargestellt). Eine solche Auswahl einer oder mehrerer Informationsgrafiken durch den Benutzer wird von dem Datenbank-Computer 2 automatisch erfaßt und in der Datenbank automatisch gespeichert. Zur Speicherung einer Auswahl einer bestimmten Informationsgrafik wird der elekttronische Zählstand dieser Informationsgrafik aktualisiert, d.h. in der Regel wird der Zählstand automatisch um Eins erhöht. Zusätzlich können Kenndaten des auswählenden Benutzers, wie eine E-Mail-Adresse oder ein Name und der Zeitpunkt der oder aller Auswahlen des Benutzers elektronisch gespeichert werden.

Bei der elektronischen Berechnung der Rangfolge der darzustellenden Informationsgrafiken 21 durch den Datenbank-Computer 2 werden die jeweiligen Zählstände derart berücksichtigt, daß eine Informationsgrafik in der Rangfolge vor einer anderen Informationsgrafik plaziert wird, wenn der aktuelle elektronische Zählstand der einen Informationsgrafik höher als der aktuelle elektronische Zählstand der anderen Informationsgrafik ist, d.h., die eine Informationsgrafik wurde von den Benutzern bisher häufiger ausgewählt als die andere Informationsgrafik. Dies bedeutet, daß eine Informationsgrafik, die erst seit kurzer Zeit für eine Auswahl durch den Benutzer zur Verfügung steht, d.h. von der Datenbank an den Benutzer-Computer 1 elektronisch übermittelt und auf dem Bildschirm 20 dargestellt werden kann, ist zunächst am Ende der Rangfolge plaziert. Beinhaltet die Informationsgrafik aus Sicht der Benutzer interessante Informationen über ein Ereignis oder ein Produkt, so wird diese Informationsgrafik jedoch oft von den Benutzern ausgewählt werden und wegen des hierdurch zunehmenden Zählstandes in der Rangfolge automatisch nach "oben steigen".

Bei einer zweiten Ausführungsform wird die Rangfolge der Informationsgrafiken 21 in Abhängigkeit von einer subjektiven Attraktivität $A_s$ berechnet. Die subjektive Attraktivität $A_s$ ist einen weiterer Zählparameter zum automatischen Sortieren der Informationsgrafiken 21, d.h. zur elektronischen Berechnung der Rangfolge, und berechnet sich für eine betreffende Informationsgrafik wie folgt:

$$A_s = T / PV_T \qquad (1)$$

wobei T die Anzahl der Benutzer ist, die die betreffende Informationsgrafik bereits ausgewählt haben, und $PV_T$ angibt, wie oft die betreffende Informationsgrafik auf dem Bildschirm 20 des Benutzer-Computers 1 elektronisch dargestellt wurde, bevor die betreffende Informationsgrafik durch den Benutzer ausgewählt wird. $PV_T$ berücksichtigt hierbei auch Darstellungen der betreffenden Informationsgrafik auf anderen Benutzer-Computern durch andere Benutzer. Der Wert von $PV_T$ wird bei einer Darstellung der betreffenden Informationsgrafik nicht erhöht, wenn die betreffende Informationsgrafik für einen Benutzer elektronisch dargestellt wird, der die betreffende Informationsgrafik zu einem früheren Zeitpunkt bereits ausgewählt hat. Hierzu werden elektronische Anmeldedaten des Benutzers, die dieser im Rahmen einer Identifizierung angegeben hat, und elektronisch gespeicherte Daten genutzt, denen zu entnehmen ist, durch welche Benutzer die betreffende Informationsgrafik bereits ausgewählt wurde. Der Anmeldeprozeß (Identifizierung) und die elektronische Speicherung der Daten wird später beschrieben.

Die für die subjektive Attraktivität $A_s$ vorgesehene Quotientenbildung $T / PV_T$ ermöglicht, daß eine bestimmte Informationsgrafik, die erst seit kurzer Zeit zur Auswahl durch den Benutzer zur Verfügung steht, schon nach diesem kurzen Zeitraum auf einer vorderen Position innerhalb der automatischen Rangfolge der Informationsgrafiken 21 plaziert sein kann. Dies ist dann der Fall, wenn einer hoher Prozentsatz der Benutzer, die sich die bestimmte Informationsgrafik auf dem Bildschirm elektronisch darstellen lassen, die bestimmte Informationsgrafik auch auswählt. Dieser Umstand reflektiert eine hohe Attraktivität der bestimmten Informationsgrafik für die Benutzer und führt dazu, daß Informationsgrafiken automatisch schon nach kurzer Zeit einen vorderen Platz in der elektrisch berechneten Rangfolge der Informationsgrafiken 21 einnehmen können.

Wird eine Informationsgrafik mehrfach auf dem Bildschirm 20 dargestellt, ohne daß diese von dem Benutzer ausgewählt wird, so vermindert sich die subjektive Attraktivität $A_s$ dieser Informationsgrafik automatisch.

Da die elektronisch berechnete Rangfolge der Informationsgrafiken bei der zweiten Ausführungsform nach der Größe der subjektiven Attraktivität $A_s$ automatisch bestimmt wird, wird eine Informationsgrafik in der Rangfolge "nach unten verschoben", wenn diese Informationsgrafik auf dem Bildschirm 20 dargestellt wird, ohne ausgewählt zu werden. Es war für den Benutzer dann attraktiver, eine andere der Informationsgrafiken 21 auszuwählen.

Bei einer dritten Ausführungsform wird bei der elektronischen Berechnung der Rangfolge der Informationsgrafiken 21 durch den Datenbank-Computer 2 eine objektive Attraktivität $A_o$ der jeweiligen Informationsgrafik berücksichtigt.

Jede der Informationsgrafiken 21 ist einem Anbieter zugeordnet, der die jeweilige Informationsgrafik 21 in der Datenbank elektronisch abgelegt und Interesse an der elektronischen Verbreitung der in der Informationsgrafik 21 enthaltenen Information sowie deren Wahrnehmung durch einen Benutzer des Benutzer-Computers 1 hat. Zu diesem Zweck werden in der Datenbank Zuordnungsdaten elektronisch gespeichert. Um den Anbietern die Möglichkeit zu geben, die ihnen zugeordnete Informationsgrafik 21 in der elektronisch berechneten Reihenfolge der auf dem Bildschirm 20 dargestellten Informationsgrafiken 21 möglichst weit oben zu plazieren, wird die objektive Attraktivität $A_o$ automatisch berücksichtigt. Die objektive Attraktivität $A_o$ einer Informationsgrafik berechnet sich wie folgt:

$$A_o = (1000 * PA * PW)/(MPV - PV + T) \qquad (2)$$

wobei PA die Anzahl von Preisen, PW der Wert eines Preises, MPV die maximal erlaubte Anzahl der Darstellungen einer Informationsgrafik auf dem Benutzer-Computer 1, PV die aktuelle Anzahl der Darstellungen der Informationsgrafik und T die Anzahl der Teilnehmer sind, die die jeweilige Informationsgrafik ausgewählt haben. Bei den Preisen handelt es sich um Waren oder Dienstleistungen, die von einem Anbieter, dem die jeweilige Informationsgrafik zugeordnet ist, für eine Verlosung unter den Benutzern zur Verfügung gestellt werden. Der Anbieter kann mit Hilfe der Auswahl seiner Preise den Platz der ihm zugeordneten Informationsgrafik in der Rangfolge der Informationsgrafiken 21 beeinflussen.

Es kann auch vorgesehen sein, daß sich der Platz einer Informationsgrafik 21 in der elektronisch berechneten Rangfolge zunächst nach dem Zählstand oder der subjektiven Attraktivität $A_s$ bestimmt, und die objektive Attraktivität $A_o$ automatisch herangezogen wird, wenn der Zählstand und/oder die subjektive Attraktivität $A_s$ für zwei Informationsgrafiken übereinstimmen. Es kann auch vorgesehen sein, daß der Zählstand, die subjektive Attraktivität $A_s$ und/oder die objektive Attraktivität $A_o$ in jeweils gewichteter Form gemeinsam zur elektronischen Berechnung der Rangfolge verwendet werden.

Die berechnete objektive Attraktivität $A_o$ einer Informationsgrafik 21 wird in einem Sichtfeld 24 im Bereich der jeweils zugehörigen Informationsgrafik 21 auf dem Bildschirm 20 ausgegeben (vgl. Figur 2). Durch das Zusammenspiel von Rangfolge der Informationsgrafiken 21 nach subjektiver Attraktivität $A_s$ bzw. nach Zählstand und der indirekten Beeinflußung des Verhaltens der Benutzer durch das Anzeigen der objektiven Attraktivität $A_o$ ergibt sich eine Dynamik, die für die Benutzer einen Anreiz schafft, sich sämtliche Informationsgrafiken 21 auf der Suche nach attraktiven Preisen anzusehen. Auch der Zählstand und/oder die subjektive Attraktivität $A_s$ können im Bereich einer zugehörigen Informationsgrafik auf dem Bildschirm 20 automatisch angezeigt werden (nicht dargestellt).

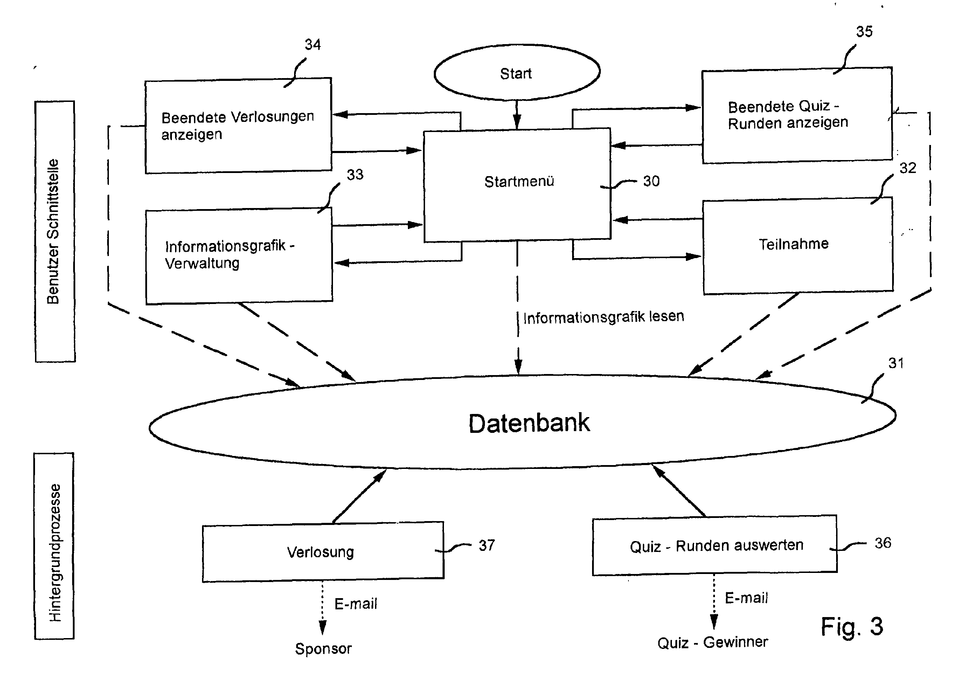

Die parameterabhängige Darstellung der Informationsgrafiken 21 gemäß der berechneten Rangfolge wird im Folgenden unter Bezugnahme auf ein Blockdiagramm gemäß Figur 3 näher beschrieben. Nach einem Start erscheint auf dem Bildschirm 20 des Benutzer-Computers 1 ein Startmenü 30, welches im wesentlichen der Darstellung in Figur 2 entspricht. Zum Aufbau der Darstellung des Startmenüs 30 auf dem Bildschirm 20 müssen die darzustellenden Informationsgrafiken 21 aus einer Datenbank 31 gelesen werden.

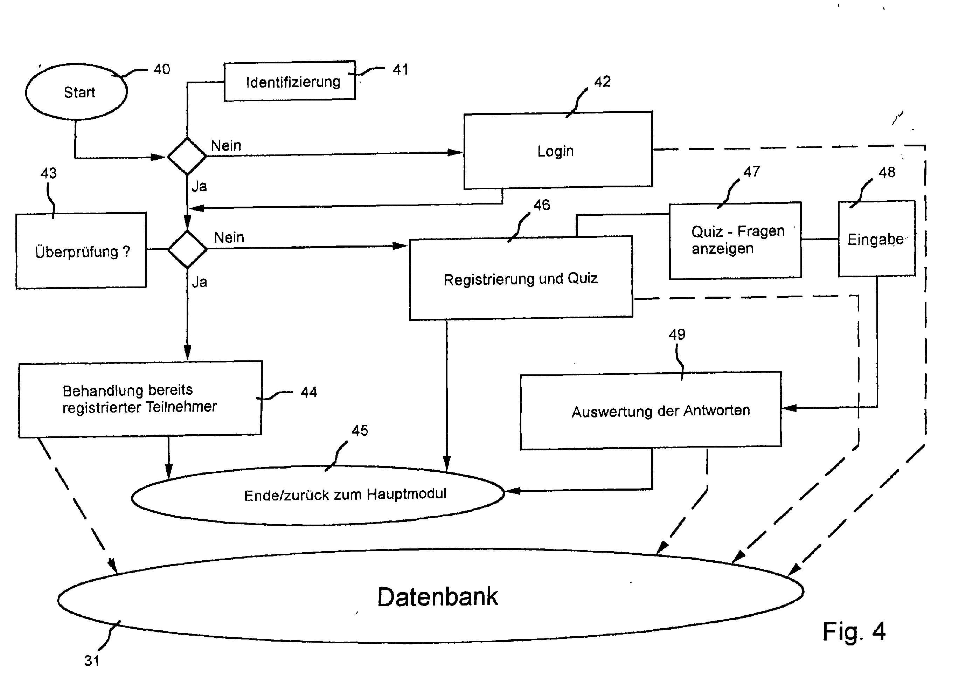

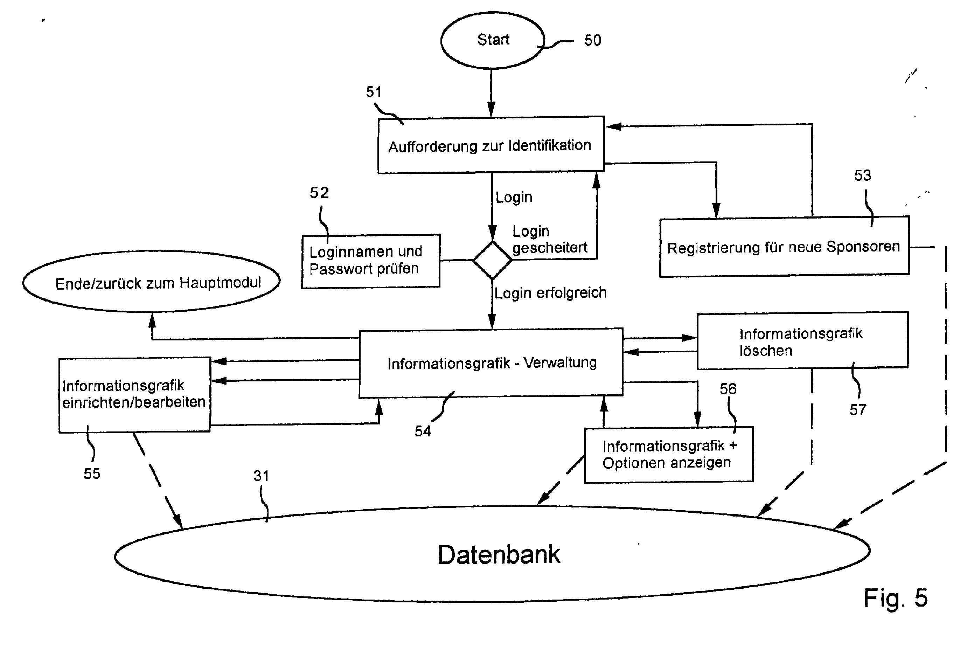

Jede der dargestellten Informationsgrafiken 21 weist das erste Auswahlfeld 23 auf (vgl. Figur 2). Durch Betätigen des ersten Auswahlfeldes 23, das der Benutzer des Benutzer-Computers 1 mit Hilfe einer Tastatur oder einer Maus (nicht dargestellt) ausführt, initiiert der Benutzer eine Teilnahme an einer Verlosung 32. Ausgehend hiervon kann der Benutzer zusätzlich an einer Quiz-Runde teilnehmen. Dieses wird in Verbindung mit Figur 4 später beschrieben. Des weiteren kann der Benutzer vom Startmenü 30 zu einer Informationsgrafik-Verwaltung gelangen 33. Dieses wird später im Zusammenhang mit Figur 5 beschrieben. Darüber hinaus können beendete Verlosung 34 und beendete Quiz-Runden 35, inklusive der jeweiligen Ergebnisse abgerufen und auf dem Bildschirm 20 dargestellt werden.

Figur 4 zeigt ein Blockdiagramm der Teilnahme eines Benutzers an einer Verlosung und/oder einer Quiz-Runde, nachdem von dem Benutzer eine bestimmte der Informationsgrafiken 21 ausgewählt wurde. Nach dem Start 40 wird geprüft, ob der Benutzer sich bereits identifiziert hat 41. Ist dies nicht der Fall, so wird ein Login-Prozeß 42 ausgeführt. Der Benutzer muß hierbei beispielsweise eine E-Mail-Adresse und/oder einen selbstgewählten Spitznamen eingeben. Nach Abschluß des Login-Prozesses 42 werden die Eingaben in einem weiteren Schritt überprüft 43. Hierbei wird festgestellt, ob der Benutzer bereits als Teilnehmer an der Verlosung registriert ist, d.h. ob die zu diesem Zeitpunkt von dem Benutzer ausgewählte Informationsgrafik bereits zu einem früheren Zeitpunkt von dem selben Benutzer ausgewählt wurde, so daß dieser Benutzer bereits zur Teilnahme an der Verlosung registriert wurde. Dieses wird anhand der für die Verlosung gespeicherten Daten in der Datenbank 31 überprüft. Hat der Benutzer bereits teilgenommen, d.h. er ist bereits für die Verlosung registriert, so gelangt der Benutzer zurück zum Startmenü 45. Hat der Benutzer noch nicht teilgenommen, so erfolgt zunächst eine Registrierung für die Verlosung 46. Hierbei werden entsprechende Daten in der Datenbank 31 gespeichert. Es kann vorgesehen sein, daß in diesem Zusammenhang der Zählstand der ausgewählten Informationsgrafik nur um Eins erhöht wird, wenn der Benutzer noch nicht teilgenommen hat.

Anschließend wird auf dem Bildschirm 20 ein Formular zur Teilnahme an der Verlosung angezeigt 47. Das Formular kann zusätzlich Fragen enthalten. Wenn der Benutzer die Fragen beantwortet, nimmt der Benutzer zusätzlich an einer Quiz-Runde teil. Auf dem Formular wird der Benutzer darauf hingewiesen, daß er Hinweise zur Beantwortung der Fragen auf einer Internet-Seite des Anbieters findet, welcher die vom Benutzer soeben ausgewählte Informationsgrafik zur Verfügung gestellt. Vor der Beantwortung der Fragen "besucht" der Benutzer dann zunächst die Internet-Seite des Anbieters. Anschließend beantwortet der Benutzer die Fragen vorzugsweise dadurch, daß er zwischen JA- und NEIN-Optionen auswählt. Es kann auch vorgesehen sein, daß der Benutzer Daten mit Hilfe von Eingabemitteln, beispielsweise einer Tastatur eingeben muß 48.

Wenn die Informationsgrafiken 21 als Internet-Bannerwerbungen ausgebildet sind, erhöht sich durch das beschriebene Verfahren zum Auswählen der Informationsgrafiken 21 die Klick-Rate für die Internet-Bannerwerbungen. Mit Hilfe der vorgesehenen Kombination von Verlosung und Quiz-Runde, die für den Benutzer jeweils einen Anreiz schaffen, sich mit der Informationsgrafik auseinander zu setzen, kann der Trend durchbrochen werden, daß Internet-Bannerwerbungen immer weniger von den Benutzern wahrgenommen werden. So betragen Klick-Raten gegenwärtig zum Teil nur 0,6 %. Von besonderem Vorteil ist in diesem Zusammenhang, daß der Benutzer durch die Teilnahme an der Verlosung/Quiz-Runde keinerlei Verpflichtung gegenüber dem Anbieter einer Informationsgrafik eingeht, so daß die Akzeptanz des Benutzers gegenüber der bewußten Auseinandersetzung mit dem Inhalt der Informationsgrafik gefördert wird.

Die Antworten des Benutzers werden mit vorgegebenen Antworten verglichen 49, die in der Datenbank 31 des Datenbank-Computers 2 gespeichert sind. Für richtige Antworten werden dem Benutzer Punkte in der Quiz-Runde gutgeschrieben. Für jede falsche Einschätzung werden dem Teilnehmer Punkte abgezogen. Eine Quiz-Runde findet hierbei über einen bestimmten Zeitraum, so daß der Benutzer sein persönliches Punktekonto durch die Teilnahme an verschiedenen Verlosungen und die zusätzliche Teilnahme an Quiz-Runden verändern kann, die für ihn jeweils mit Hilfe der Auswahl von dargestellten Informationsgrafiken 21 zugänglich sind.

Die Anzahl der Punkte, die dem Benutzer pro Antwort gutgeschrieben bzw. abgezogen werden, richtet sich danach, wie lange die Quiz-Runde bereits elektronisch aktiv ist, das heißt, wie lange ein Benutzer an ihr bereits teilnehmen kann. Eine Teilnahme ist ab einem Zeitpunkt möglich, ab dem die zugehörige Informationsgrafik zur Darstellung auf dem Bildschirm 20 des Benutzer-Computers 1 elektronisch freigegeben ist. Für Antworten in Quiz-Runden werden innerhalb der ersten 6 Stunden nach der Aktivierung bzw. der Freigabe der Quiz-Runde (der Informationsgrafik) zehn Punkte berechnet. Von der 6. Bis zur 24 Stunde werden fünf Punkte berechnet. Alle 24 Stunden reduziert sich die Punktzahl um einen Punkt, so daß für alle Quiz-Runden, die länger als 96 Stunden aktiviert sind, ein Punkt je Antwort berechnet wird. Die Punktzahl jedes Benutzers (Teilnehmers) wird in der Datenbank 31 gespeichert.

Das beschriebene Vorgehen bei der Punktevergabe führt dazu, daß Informationsgrafiken, welche neu eingerichtet wurden, von den Benutzern schnell wahrgenommen werden. Benutzer, die kurz nach der elektronischen Freigabe einer Informationsgrafik und der zugehörigen Verlosung/Quiz-Runde werden überdurchschnittlich belohnt. Auf diese Weise können Informationen, beispielsweise über neue Produkte, schnell verbreitet werden, was insbesondere bei neuen Werbekampagnen vorteilhaft ist.

Quiz-Runden laufen hierbei vorzugsweise über einen Monat. Zu Beginn des Monats werden elektronische Punktekonten aller möglichen Benutzer bzw. Teilnehmer mit Null Punkten initialisiert. Die Punktekonten werden in der Datenbank 31 gespeichert. Nach Ablauf des Monats wird ein Jackpot nach folgendem Verfahren unter den Benutzern (Teilnehmern) des abgelaufenen Monats verteilt, die an der Quiz-Runde teilgenommen haben: Unter den Teilnehmern der Quiz-Runde, die mindestens einen Punktestand von einem Punkt haben, werden die zehn Teilnehmer mit dem höchsten Punkteständen bestimmt. Wenn es aufgrund von Punktgleichheit mehrere Anwärter auf den 10. Platz gibt, werden alle Anwärter auf den 10. Platz in die Verteilung des Jackpots einbezogen. Unter den Teilnehmern der Quiz-Runde, die aufgrund ihres Punktestandes nicht bei der Verteilung des Jackpots berücksichtigt werden, wird zufällig ein Teilnehmer ausgewählt, der ebenfalls einen Teil des Jackpots bekommt. Bei der anschließenden Verteilung des Jackpots wird für diesen Teilnehmer der niedrigste Punktestand zugrundegelegt, der ausreicht, um sich für den Gewinn eines Teils des Jackpots zu qualifizieren. Unter den so ermittelten Teilnehmern wird der Jackpot proportional zum erreichten bzw. angenommenen Punktestand aufgeteilt 36 (vgl. Figur 3).

Der Jackpot kann sich bevorzugt aus Werbeeinnahmen des Betreibers der Informationsgrafik-Verwaltung speisen.

Des weiteren wird zwischen allen Teilnehmern, die zur Verlosung registriert wurden 46, nach Ablauf eines vorgegebenen Zeitraums ein Preis verlost 37 (vgl. Figur 3), der vom Sponsor der Informationsgrafik zur Verfügung gestellt wird. Die Gewinner des Jackpots und der Verlosung werden jeweils vorzugsweise per E-Mail benachrichtigt, wobei die Benachrichtigung im Fall der Verlosung bevorzugt durch den Sponsor der Preise der jeweiligen Verlosung erfolgt.

Die Möglichkeit der Teilnahme an der Verlosung schafft einen Anreiz, der die Benutzer des Benutzer-Computers 1 motiviert, eine Informationsgrafik 21 auf dem Bildschirm 20 auszuwählen. Hierbei wird die in der ausgewählten Informationsgrafik 21 dargestellte Information in das Blickfeld des Benutzers gebracht, so daß sich der Benutzer bewußt mit der Information auseinandersetzt. Der Anreiz wird mit Hilfe der optionalen Quiz-Runde verstärkt.

Die vom Sponsor einer Informationsgrafik zur Verfügung gestellten Preise für die Verlosung bewirken einerseits, daß für die Benutzer ein Anreiz geschaffen wird, sich die gesponsorte Informationsgrafik anzusehen. Andererseits beeinflussen die Preise die objektive Attraktivität $A_o$ der gesponsorten Informationsgrafik, welche wiederum Einfluß auf die Plazierung der gesponsorten Informationsgrafik in der Rangfolge der darzustellenden Informationsgrafiken 21 hat.

Figur 5 ist ein Blockdiagramm, das die Verwaltung der Informationsgrafiken 21 zeigt. Nach einem Start 50 erfolgt eine Aufforderung zur Identifikation 51. Ein Anbieter (Sponsor), der eine neue Informationsgrafik in der Datenbank 31 speichern lassen möchte, um die neue Informationsgrafik in eine Darstellung auf dem Benutzer-Computer 1 einzubeziehen, muß sich dann mit einem Login-Namen und einem Paßwort anmelden 52. Sollte der Anbieter noch nicht als Anbieter (Sponsor) registriert sein, so ist zunächst eine Registrierung 53 zu durchlaufen. Nach Abschluß des Anmeldeprozesses 52 erhält der Anbieter Zugang zur Informationsgrafik-Verwaltung 54.

Ausgehend von der Informationsgrafik-Verwaltung 54 kann der Anbieter (Sponsor) eine neue Informationsgrafik und eine zugehörige Verlosung/Quiz-Runde einrichten 55, wobei der Anbieter im Zusammenhang mit der Quiz-Runde lediglich mögliche Fragen angeben kann. Die Einrichtung der Quiz-Runde, insbesondere deren Freischaltung und die Bestimmung der zu vergebenden Preise erfolgt bevorzugt durch den Betreiber der Informationsgrafik-Verwaltung. Darüber hinaus können bereits in der Datenbank 31 gespeicherte Informationsgrafiken und die zugehörige Verlosung/Quiz-Runde (d.h. die Fragen der Quiz-Runde) bearbeitet werden 55. Beim Einrichten einer neuen Informationsgrafik kann der Anbieter den Zeitpunkt bestimmen, ab welchem die Informationsgrafik für die Einbeziehung in die Rangfolge der darzustellenden Informationsgrafiken 21 aktiviert ist. Um einen Überblick über die Informationsgrafiken und die zugehörigen Daten zu erhalten, kann der Anbieter sich diese Informationen anzeigen lassen 56. Zu diesem Zweck werden die Informationen von der Datenbank 31 gelesen.

Der Anbieter hat weiterhin die Möglichkeit, Informationsgrafiken und zugehörige Verlosungen/Quiz-Runden zu löschen 57, wobei aktivierte Informationsgrafiken und Informationsgrafiken, für welche die Verlosung bzw. die Quiz-Runde bereits beendet ist, nicht gelöscht werden können.

Beim Einrichten neuer Informationsgrafiken kann der Anbieter (Sponsor) beispielsweise festlegen, für welchen Zeitraum die Informationsgrafik aktiviert werden soll, wie oft die Informationsgrafik auf dem Bildschirm 20 des Benutzer-Computers 1 dargestellt werden soll, oder ob eine Wiederholung der Darstellung zu einem späteren Zeitpunkt erfolgen soll. Diese von dem Anbieter vorgegebenen Bedingungen werden automatisch dadurch überwacht, daß die Darstellung einer bestimmten Informationsgrafik auf dem Bildschirm 20 des Benutzer-Computers 1 hinsichtlich der Häufigkeit der Darstellung und des Zeitpunkts der Darstellung erfaßt und in der Datenbank 31 gespeichert wird. Diese elektronisch erfaßten Daten haben direkten Einfluß auf die Rangfolge der darzustellenden Informationsgrafiken 21 (vgl. Gleichung (2)).

Weiterhin kann der Anbieter beim Einrichten von Informationsgrafiken angeben bzw. festlegen, daß die eingerichtete Informationsgrafik nur für Benutzer aus einem begrenzten geografischen Gebiet, beispielsweise einem Land, einer Region oder einer Stadt zur Auswahl zur Verfügung stehen soll. Auf diese Weise kann beispielsweise ein Unternehmen seine Werbung (Informationsgrafik) gezielt auf ein bestimmtes geografisches Gebiet beschränken, wenn das Unternehmen z. B. nur in diesem geografischen Gebiet tätig ist.

In gleicher Weise kann vorgesehen sein, daß der Anbieter die neue Informationsgrafik einem Themengebiet zuordnet, und hierdurch festlegt, daß die neue Informationsgrafik zum Darstellen auf einem Benutzer-Computer nur auswählbar ist, wenn der Benutzer Informationsgrafiken aus diesem Themengebiet, beispielsweise der Unterhaltungselektronik einsehen möchte. Zu diesem Zweck werden einerseits die Informationsgrafiken nach Themengebieten, vorzugsweise nach Kategorien und Unterkategorien sortiert gespeichert. Andererseits erhält der Benutzer des Benutzer-Computers nach seiner Identifizierung die Möglichkeit zum Wählen zwischen Themengebieten oder geografischen Regionen, um sich nur Informationsgrafiken darstellen zu lassen, die thematisch und/oder geografisch der Wahl des Benutzers entsprechen.

Bei einer weiteren Ausführungsform erfolgt die automatische Berechnung der Rangfolge der Informationsgrafiken in Abhängigkeit von einem Punktestand, der für jede Informationsgrafik in der Datenbank 31 elektronisch gespeichert werden kann. Der Punktestand einer betreffenden Informationsgrafik entspricht hierbei der Summe der Punkte, die von den Benutzern im Rahmen einer Bewertung der Informationsgrafiken 21 für die betreffende Informationsgrafik vergeben wurden. Die Benutzer beurteilen bzw. bewerten hierbei subjektiv die zur Auswahl stehenden Informationsgrafiken. Hierbei kann es sich beispielsweise um die persönliche Bewertung bzw. Wertung des Inhalts eines Textes oder die Bewertung einer Bilddarstellung handeln.

Zur Berechnung der Rangfolge der Informationsgrafiken kann ein modifizierter Punktestand herangezogen werden. Hierbei wird die Summe der vergebenen Punkte durch die Anzahl der Benutzer dividiert. Hierbei kann es sich um die Anzahl der Benutzer handeln, die eine Bewertung abgegeben haben, oder die Anzahl der Benutzer, auf deren Bildschirm die betreffende Informationsgrafik dargestellt wurde. Das Darstellen einer Informationsgrafik, ohne daß eine Bewertung durch den Benutzer abgegeben wird, wird als Bewertung mit null Punkten erfaßt. Das Darstellen ohne Bewertung entspricht einem Überblättern der betreffenden Informationsgrafik und wird deshalb als neutrales Desinteresse mit null Punkten gewertet.

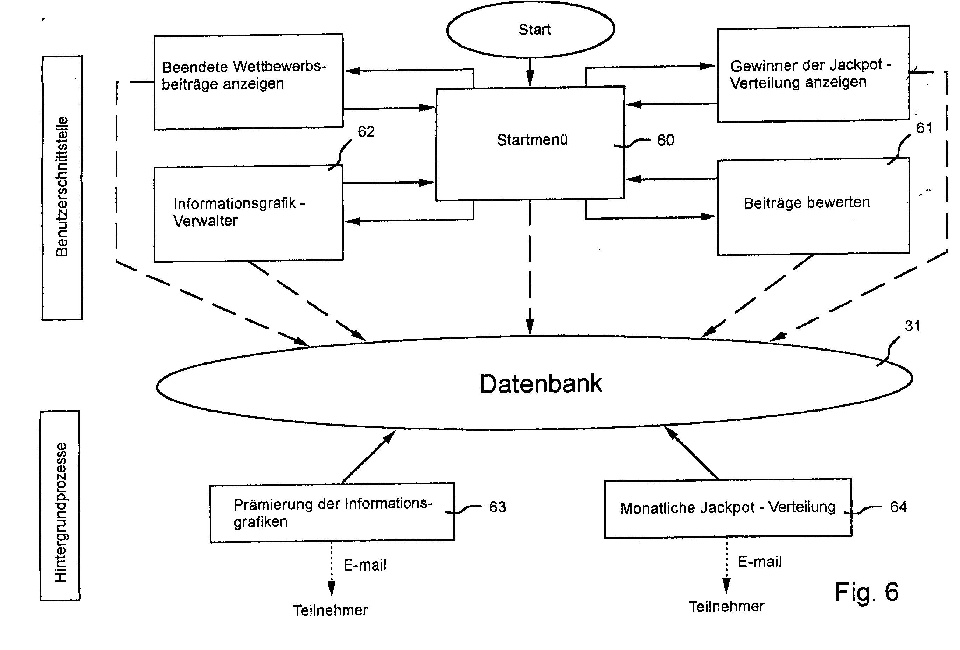

Figur 6 zeigt eine schematische Darstellung des Verfahrens zur Bewertung und Darstellung von Informationsgrafiken gemäß der weiteren Ausführungsform. Um die Informationsgrafiken bewerten zu können, muß sich der Benutzer mittels eines selbstgewählten Spitznamens und einer E-Mail-Adresse identifizieren. Weitere Angaben sind freiwillig. Nach der Identifizierung lassen sich die Benutzer die Informationsgrafiken 21 auf dem Bildschirm 20 des Benutzer-Computers 1 darstellen, wobei die Informationsgrafiken zu diesem Zweck von der Datenbank 31 geladen werde, und die Darstellung der vorher berechneten Rangfolge der Informationsgrafiken entsprechend erfolgt. Die Informationsgrafiken 21 werden hierbei im Rahmen eines Startmenüs dargestellt 60. Die Benutzer bewerten die dargestellten Informationsgrafiken dann mittels der Vergabe von positiven oder negativen Punkten 61. Vorzugsweise umfaßt eine Bewertungsskala Punkte von +10 bis -10. Die von den Benutzern für eine betreffende Informationsgrafik vergebenen Punkte werden zu dem Punktestand addiert, der für die betreffende Informationsgrafik in der Datenbank 31 gespeichert ist. Hierbei kann vorgesehen sein, daß ein relativer Punktestand gebildet wird, bei dem die Summe der von den Benutzern vergebenen Punkte durch die Anzahl der Benutzer dividiert wird, die eine Bewertung ausgeführt haben. Auf diese Weise wird eine Gleichbehandlung von Informationsgrafiken, die erst seit kurzer Zeit zur Bewertung zur Verfügung stehen, und Informationsgrafiken sichergestellt, die seit einem längeren Zeitraum bewertet werden können. Bei der Berechnung der Rangfolge der Informationsgrafiken 21 werden die Punktestände bzw. relativen Punktestände derart berücksichtigt, daß eine Informationsgrafik mit einem hohen Punktestand vor einer anderen Informationsgrafik mit einem niedrigeren Punktestand in der Rangfolge angeordnet wird.

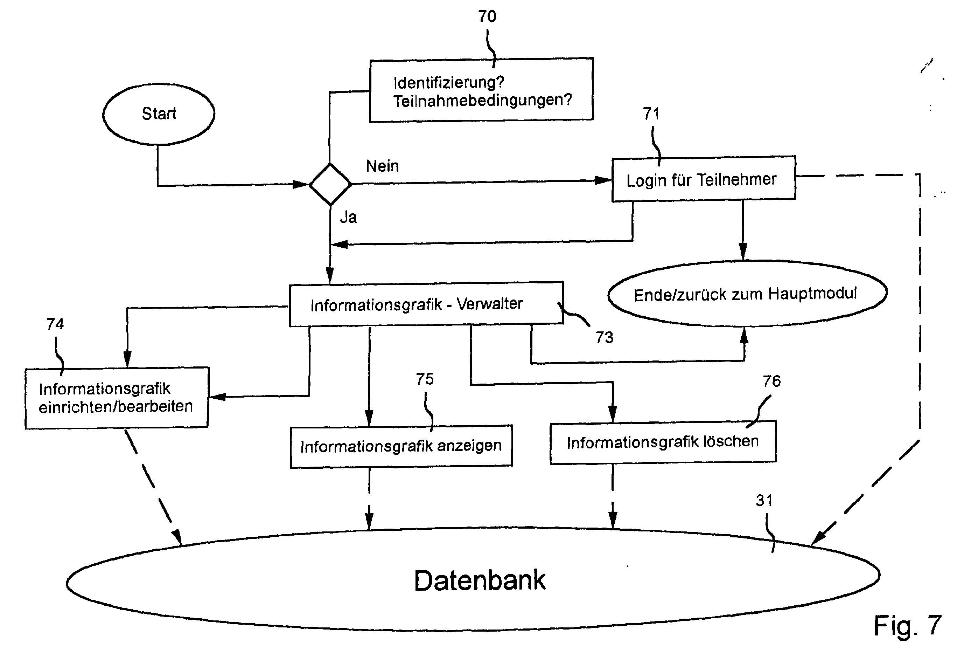

Ausgehend vom Startmenü 60 (vgl. Figur 6) können Anbieter, die eine Informationsgrafik zur Teilnahme an der Bewertung durch Benutzer einbringen möchten, zu einem Informationsgrafik-Verwalter 62 gelangen. Figur 7 zeigt eine schematische Darstellung der Eingabe und der Verwaltung der Informationsgrafiken, die zur Teilnahme an einer Bewertung vorgesehen sind, können dieses dadurch erreichen, daß zwischen dem Anbieter-Computer 3 und dem Datenbank-Computer 2 (vgl. Figur 1) eine Verbindung aufgebaut wird, so daß die Anbieter Informationsgrafiken auf der Datenbank 31 speichern können. Hierbei muß sich der Anbieter zunächst identifizieren und Teilnahmebedingungen akzeptieren 70, 71, die er sich vorher auf den Anbieter-Computer 3 laden und ansehen kann. Nach der Akzeptierung der Teilnahmebedingungen und der Eingabe persönlicher Daten 72 kann der Anbieter auf den Informationsgrafik-Verwalter zugreifen 73, um eine neue Informationsgrafik zu speichern. Der Anbieter müssen ihren tatsächlichen Namen und eine vollständige Adresse angeben. Die Akzeptanz der Teilnahmebedingungen durch die Anbieter soll der Verletzung von Urheberrechten verhindern.

Mit Hilfe des Informationsgrafik-Verwalters 73 kann ein Anbieter, der sich angemeldet und identifiziert hat 70, 71, Informationsgrafiken, die zur Teilnahme an der Bewertung vorgesehen sind, einrichten, bearbeiten, anzeigen oder löschen 74, 75, 76.

Möchte ein Benutzer mittels des Benutzer-Computers 1 an der Bewertung von Informationsgrafiken eines Themenbereichs teilnehmen, so werden die elektronisch gespeicherten Informationsgrafiken von der Datenbank 31 automatisch abgerufen. Die abgerufenen Informationsgrafiken werden dann der elektronisch berechneten Rangfolge entsprechend auf dem Bildschirm 20 dargestellt. Die berechnete Rangfolge hängt hierbei von der bisherigen Bewertung der teilnehmenden Informationsgrafiken ab. Der Benutzer kann dann einzelne dargestellte Informationsgrafiken 21 auswählen, um diese vergrößert auf dem Bildschirm 20 darzustellen, so daß Details dieser Informationsgrafiken 21 erkennbar werden. Dies erleichtert, insbesondere bei Bilddarstellungen eine Bewertung der einzelnen Informationsgrafiken 21. Durch die Bewertung werden die elektronischen Punktestände der Informationsgrafiken 21 automatisch verändert. Diese Veränderungen haben wiederum Einfluß auf die Positionen der Informationsgrafiken in der elektronisch berechneten Rangfolge. Erhält eine Informationsgrafik eine Bewertung mit einer negativen Punktezahl, so wird diese Informationsgrafik bei der nächsten Berechnung der Rangfolge der Informationsgrafiken automatisch "weiter hinten plaziert".

Die Bewertung einer Anzahl von Informationsgrafiken 21 eines Themenbereichs ist einen vorgegebenen Zeitraum, beispielsweise einen Monat begrenzt. Nach Ablauf des vorgegebenen Zeitraums werden zwischen Anbietern, die die Informationsgrafiken mit den höchsten Punkteständen bzw. den höchsten modifizierten Punktständen eingebracht haben, elektronisch Prämien ausgelost 63 (vgl. Figur 6). Es wird eine Gewinnerliste elektronisch erstellt. Die Gewinner werden per E-Mail automatisch über den Gewinn benachrichtigt.

Weiterhin kann vorgesehen sein, daß zwischen Benutzern, die bei der Bewertung von Informationsgrafiken besonders aktiv waren, d.h. die im Vergleich zu anderen Benutzern die meisten Informationsgrafiken bewertet haben, ein Jackpot elektronisch verteilt wird 64 (vgl. Figur 6). Um die fleißigsten Benutzer elektronisch zu ermitteln, wird jedem Benutzer in der Datenbank 31 ein Zählkonto elektronisch zugeordnet. Dieses elektronische Zählkonto wird am Beginn eines Zeitraums, der für die Bewertung von Informationsgrafiken eines Themenbereichs vorgesehen ist, automatisch auf Null initialisiert. Für jede durchgeführte Bewertung einer Informationsgrafik werden dem Benutzer Punkte auf seinem Zählkonto elektronisch gutgeschrieben. Hierbei erhält der Benutzer zehn Punkte gutgeschrieben, wenn er eine Informationsgrafik innerhalb der ersten sechs Stunden bewertet, nachdem die Informationsgrafik zur Teilnahme an der Bewertung freigegeben wurde. Innerhalb der nächsten 24 Stunden erhält der Benutzer fünf Punkte für eine durchgeführte Bewertung. Alle weiteren 24 Stunden reduziert die für die Durchführung einer Bewertung vergebene Punktezahl um eine Punkt.

Auch für die fleißigsten Benutzer wird eine Gewinnerliste elektronisch erstellt, und die Gewinner werden per E-Mail benachrichtigt. Die Verteilung des Jackpots zwischen den Benutzern 64, die an der Bewertung teilgenommen haben, schafft einen zusätzlichen Anreiz für eine erneute Teilnahme an zukünftigen Bewertungsrunden.

Die Informationsgrafiken werden bei der weiteren Ausführungsform elektronisch nach Themenbereichen geordnet. Beispielsweise können die Themenbereiche Produktinformationen oder Umfragen zu aktuellen Themen vorgesehen sein. Selbstverständlich können einem Themenbereich ausschließlich Informationsgrafiken mit Bilddarstellungen zugeordnet sein. Rangfolgen werden jeweils für die dem gleichen Themenbereich zugeordneten Informationsgrafiken erstellt, d.h., nur Informationsgrafiken, die dem gleichen Themenbereich zugeordnet sind, "konkurrieren" bei der Berechnung der Rangfolge der Informationsgrafiken 21.

Das Verfahren zur Bewertung der Informationsgrafiken bietet eine Plattform zur Erforschung der Meinung eines breiten Publikums zu einer Vielzahl von Themenbereichen. Beispielsweise können Meinungsumfragen, Marktforschungen, Trendforschungen in kurzer Zeit durchgeführt werden. Eine Werbeagentur kann verschiedene Werbeaussagen, beispielsweise Slogans im Rahmen des Bewertungsverfahrens zur Verfügung stellen. In diesem Fall umfassen die Informationsgrafiken im wesentlichen nur Textelemente.

Die Verteilung des Jackpots nach Ablauf des vorgegebenen Zeitraums zur Bewertung schafft für die Benutzer einen Anreiz, sich an der Bewertung der Werbeaussagen zu beteiligen. Auch Fragen im Rahmen der Trend- oder Wahlforschung, beispielsweise bei der Trendforschung hinsichtlich der Beliebtheit von Persönlichkeiten, können einer Bewertung unterzogen werden. Der nach Ablauf des vorgegebenen Zeitraums für eine Bewertung durch die Benutzer angesammelte Punktstand ist dann ein Maß für die Beliebtheit der Persönlichkeit. Hierbei kann vorgesehen sein, von dem Benutzer zusätzlich die Eingabe einer Antwort zu fordern. Eine solche politische Frage könnte beispielsweise lauten: "Sind Sie mit einem Einsatz der UN-Friedenstruppen einverstanden?".

Des weiteren könnte eine Agentur eine Druck-Werbekampagne, ein neues Plakat, eine Zeitungsanzeige, Produktverpackungen oder Online-Werbebanner kurzfristig bewerten lassen. Dies gilt in gleicher Weise für Femseh- und Kinospots oder Radiospots, bei deren Bewertung ergänzend zur Informationsgrafik oder ausschließlich Tondaten vom Benutzer bewertet werden. Das Verfahren kann zweckmäßig zur Bewertung neuer Produkte durch Verbraucher genutzt werden. Hierbei werden wertende Wortbeiträge der Verbraucher über ein neues Produkt einer Bewertung durch die Benutzer des Computer-Netzwerks 5 zur Verfügung gestellt. Anhand der auf Basis der Bewertung durch die Benutzer des Computer-Netzwerks 5 erstellten Reihenfolge der Wortbeiträge erhalten sowohl der Hersteller des neuen Produkts oder sein Vertreter, beispielsweise eine Werbeagentur, als auch die Verbraucher in kurzer Zeit bewertende Informationen über das neue Produkt. Bei dem neuen Produkt kann es sich beispielsweise um eine neue Website im Internet handeln.

Im Zusammenhang mit allen beschriebenen Ausführungsformen wird es einem Benutzer, der sich nach vorheriger Anmeldung und Identifizierung (Registrierung) Informationsgrafiken auf seinem Benutzer-Computer darstellen läßt, ermöglicht, andere Benutzer für eine Teilnahme an der Verlosung/Quiz-Runde/Bewertung zu werben. Zu diesem Zweck wird dem bereits registrierten Benutzer ein elektronisches Formular auf dem Bildschirm 20 angezeigt, in welches der registrierte Benutzer ein Empfehlungsschreiben an einen Adressaten seiner Wahl eintragen kann, wobei insbesondere eine E-Mail-Adresse des Adressaten einzugeben ist. Bei dem Adressaten kann es sich um eine persönlichen Bekannten oder einen Geschäftspartner des registrierten Benutzers handeln. Das auf diese Weise erstellte elektronische Empfehlungsschreiben wird zusammen mit einer Identifikationsnummer des registrierten Benutzers in der Datenbank elektronisch gespeichert und per E-Mail automatisch an den Adressaten gesandt. Bei erfolgreicher Werbung erhält der registrierte Benutzer Punkte für die Jackpot-Verteilung elektronisch gutgeschrieben.

Um zu verhindern, daß Punkte durch Scheinwerbung erworben werden, wird beim elektronischen Versenden der E-Mail ein Passwort elektronisch erzeugt, das zusammen mit dem Empfehlungsschreiben an den Adressaten gesendet wird. Dieses Passwort wird zusammen mit der Empfehlung in der Datenbank elektronisch gespeichert, und ist dem registrierten Benutzer, welcher die Empfehlung eingegeben hat, nicht bekannt. Wenn sich der Adressat bei der Erstregistrierung als Benutzer mit dem Passwort identifiziert, werden dem registrierten Benutzer, welcher die Empfehlung ausgesprochen hat, automatisch Punkte auf seinem Konto für die Verteilung des Jackpots gutgeschrieben.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

**Patentansprüche**

1. Verfahren zum automatischen Darstellen mehrerer Grafiken (21), die in einer Datenbank (31) elektronisch gespeichert sind, auf einem Bildschirm (20) wenigstens eines Benutzer-Computers (1), der mit einem die Datenbank (31) umfassenden Computer-Netzwerk (5) so verbunden ist, daß zwischen dem wenigstens einen Benutzer-Computer (1) und dem Computer-Netzwerk (5) Daten elektronisch ausgetauscht werden können, wobei die mehreren Grafiken (21) bei der Darstellung auf dem Bildschirm (20) jeweils ein erstes Auswahlfeld (24) umfassen und für die mehreren Grafiken (21) jeweils ein von mindestens einem Zählparameter abhängiger Zählstand elektronisch erfaßt und in der Datenbank (31) elektronisch gespeichert wird, das Verfahren die folgenden Verfahrensschritte umfassend:

a) elektronisches Auswählen der mehreren Grafiken aus in der Datenbank (31) elektronisch gespeicherten Grafiken;
b) elektronisches Bestimmen einer jeweiligen Höhe des elektronisch erfaßten Zählstands der mehreren Grafiken (21) als Funktion des mindestens einen Zählparameters;
c) elektronisches Bestimmen einer ersten Rangfolge der mehreren Grafiken (21) in Abhängigkeit von der jeweiligen Höhe des elektronisch erfaßten Zählstands der mehreren Grafiken (21);
d) elektronisches Bereitstellen der mehreren Grafiken (21) entsprechend der ersten Rangfolge an dem wenigstens einen Benutzer-Computer (1), so daß die mehreren Grafiken (21) auf einem Bildschirm (20) des wenigstens einen Benutzer-Computers (1) der ersten Rangfolge entsprechend elektronisch darstellbar sind;
e) elektronisches Darstellen mehrerer der gemäß d) bereitgestellten Grafiken (21) der ersten Rangfolge entsprechend;
f) elektronisches Erfassen einer Auswahl mindestens einer der gemäß e) dargestellten Grafiken (21) durch einen Benutzer, welcher die mindestens eine der gemäß e) dargestellten Grafiken (21) durch Betätigen des ersten Auswahlfelds (24) mit Hilfe von Auswahlmitteln des wenigstens einen Benutzer-Computers (1) auswählt; und
g) elektronisches Anpassen des mindestens einen Zählparameters für wenigstens eine oder alle der gemäß d) bereitgestellten Grafiken in Abhängigkeit von der elektronisch erfaßten Auswahl des Benutzers.

2. Verfahren nach Anspruch 1, die weiteren Verfahrensschritte umfassend:

   h) elektronisches Auswählen weiterer Grafiken aus den in der Datenbank (31) elektronisch gespeicherten Grafiken, wobei wenigstens ein Teil der mehreren Grafiken (21) von den weiteren Grafiken umfaßt ist;
   i) elektronisches Berechnen der jeweiligen Höhe des elektronisch erfaßten Zählstands der weiteren Grafiken (21) als Funktion des mindestens einen Zählparameters;
   j) elektronisches Bestimmen einer zweiten Rangfolge der weiteren Grafiken (21) in Abhängigkeit von der jeweiligen Höhe des elektronisch erfaßten Zählstands der weiteren Grafiken (21); und
   k) elektronisches Bereitstellen der weiteren Grafiken (21) entsprechend der zweiten Rangfolge an dem wenigstens einen Benutzer-Computer (1), so daß die weiteren Grafiken (21) auf einem Bildschirm (20) des wenigstens einen Benutzer-Computers (1) der zweiten Rangfolge entsprechend elektronisch darstellbar sind.

3. Verfahren nach Anspruch 1 oder 2, dadurch **gekennzeichnet,** daß beim elektronischen Bestimmen der jeweiligen Höhe des Zählstands ein erster Zählparameter (P1) automatisch berücksichtigt wird:

$$P1 = T/PV_T$$

   wobei T eine Anzahl der elektronisch erfaßten Auswahl(en) der jeweiligen Grafik durch den Benutzer des wenigstens einen Benutzer-Computer (1) ist, und PVT eine elektronisch erfaßte Anzahl angibt, wie oft die jeweilige Grafik auf dem Bildschirm (20) des wenigstens einen Benutzer-Computer (1) dargestellt wurde, bevor erstmalig eine Auswahl der jeweiligen Grafik durch den Benutzer elektronisch erfaßt wurde.

4. Verfahren nach einem der Ansprüche 1 bis 3, **dadurch gekennzeichnet**, daß beim elektronischen Bestimmen der jeweiligen Höhe des Zählstands ein zweiter Zählparameter (P2) automatisch berücksichtigt wird:

$$P2 = (1000 * PA * PW)/(MPV - PV + T)$$

   wobei

PA    eine elektronisch gespeicherte Anzahl von Preisen,

PW    eine elektronisch gespeicherte Wertzahl eines der Preise,

MPV   eine elektronisch gespeicherte, maximal erlaubte Anzahl von Darstellungen der jeweiligen Grafik auf dem Bildschirm (20) des wenigstens einen Benutzer-Computers (1),

PV    eine aktuelle elektronisch gespeicherte Anzahl der bereits erfolgten Darstellungen der jeweiligen Grafik auf dem Bildschirm (20) des wenigstens einen Benutzer-Computers (1), und

T     eine elektronisch gespeicherte Anzahl der elektronisch erfaßten Auswahl(en) der jeweiligen Grafik durch den Benutzer des wenigstens einen Benutzer-Computer (1) ist.

5. Verfahren nach einem der Ansprüche 3 oder 4, dadurch **gekennzeichnet**, daß für den ersten und/oder den zweiten Zählparameter (P1, P2) jeweils ein Wichtungsfaktor elektronisch gespeichert und bei der elektronischen Berechnung der jeweiligen Höhe des elektronisch erfaßten Zählstands der Grafik automatisch berücksichtigt wird.

6. Verfahren nach einem der Ansprüche 4 bis 6, wobei:

   - der Verfahrensschritt f) zum elektronischen Erfassen der Auswahl des Benutzers das elektronische Speichern von Auswahldaten in der Datenbank (31) umfaßt, wobei die Auswahldaten Kenndaten des Benutzers und Kenndaten der mindestens einen vom Benutzer ausgwählten Grafik enthalten;
   - vor dem elektronischen Anpassen des mindestens einen Zählparameters gemäß g) ein Verfahrensschritt zum elektronischen Überprüfen der Auswahldaten ausgeführt wird; und
   - T für die jeweils vom Benutzer ausgewählte Grafik erhöht wird, wenn sich beim elektronischen Überprüfen der Auswahldaten ergibt, daß die jeweilige Grafik von einer früheren Auswahl des Benutzers nicht umfaßt ist.

7. Verfahren nach einem der vorhergehenden Ansprüche, dadurch **gekennzeichnet**, daß in der Datenbank (31) für jede der in der Datenbank (31) elektronisch gespeicherten Grafiken ein Gesamtanzeigenzähler elektronisch gespeichert wird, wobei der Gesamtanzeigenzähler jeweils um einen festen Wert erhöht wird, wenn die jeweilige Grafik von den gemäß e) dargestellten Grafiken umfaßt ist.

8. Verfahren nach Anspruch 7, dadurch **gekennzeichnet**, daß beim elektronischen Auswählen der mehreren Grafiken gemäß a) und/oder beim elektronischen Auswählen der weiteren Grafiken gemäß h) die jeweiligen Gesamtanzeigenzähler der mehreren bzw. der weiteren Grafiken elektronisch überprüft werden, so daß nur Grafiken ausgewählt werden, für die der jeweils elektronisch gespeicherte Gesamtanzeigenzählerstand kleiner als ein jeweiliger maximaler Gesamtanzeigenzählerstand ist, der in der Datenbank (31) elektronisch gespeichert ist.

9. Verfahren nach einem der vorhergehenden Ansprüche, dadurch **gekennzeichnet,** daß die Kenndaten des oder aller Benutzer, die in einem vorbestimmten Zeitraum die wenigstens eine Grafik gemäß e) auswählen, sowie der Zeitpunkt der jeweiligen Auswahl elektronisch erfaßt und in der Datenbank (31) elektronisch gespeichert werden.

10. Verfahren nach Anspruch 9, dadurch **gekennzeichnet**, daß aus den elektronisch gespeicherten Kenndaten nach Ablauf des vorbestimmten Zeitraums Kenndaten mehrerer Benutzer zufällig elektronisch ausgewählt werden.

11. Verfahren nach einem der vorhergehenden Ansprüche, **gekennzeichnet** durch die weiteren Verfahrensschritte:

    - elektronisches Darstellen einer Bildschirmabfragemaske auf dem Bildschirm (20) des wenigstens einen Benutzer-Computers (1) zum Abfragen von Informationen von dem Benutzer des wenigstens einen Benutzer-Computers (1);
    - elektronisches Erfassen einer Antworteingabe, die der Benutzer mit Hilfe der Eingabemittel des wenigstens einen Benutzer-Computers (1) eingibt;
    - Auswerten der Antworteingabe mit Hilfe eines elektronischen Vergleichs der Antworteingabe mit elektronisch gespeicherten Referenzdaten aus der Datenbank (31);
    - elektronisches Zuordnen eines Ergebnisertes zu dem Benutzer in Abhängigkeit vom Ergebnis des elektronischen Vergleichs, wobei der elektronisch zugeordnete Ergebniswert in Abhängigkeit von der Richtigkeit oder Falschheit der Dateneingabe vergrößert bzw. verkleinert wird; und - elektronisches Speichern des zugeordneten Ergebniswertes in der Datenbank (31).

12. Verfahren nach Anspruch 11, dadurch **gekennzeichnet,** daß in Abhängigkeit von einer jeweiligen Größe des zugeordneten Ergebniswertes eine Reihenfolge aller zugeordneten Ergebniswerte elektronisch berechnet wird.

13. Verfahren nach Anspruch 10 oder 11, dadurch **ge-**

**kennzeichnet**, daß vor der Antworteingabe durch den Benutzer Quellinformation von einem Informations-Computer (4), der mit dem Computer-Netzwerk (5) verbunden ist, an den wenigstens einen Benutzer-Computers (1) elektronisch übermittelt wird, die auf dem Bildschirm (20) des wenigstens einen Benutzer-Computers (1) dargestellt wird.

14. Verfahren nach Anspruch 13, dadurch **gekennzeichnet,** daß die Quellinformation unter einer URL-Adresse in dem Computer-Netzwerk (5) gespeichert ist.

15. Verfahren nach einem der vorhergehenden Ansprüche, dadurch **gekennzeichnet,** daß eine Dateneingabe eines Anbieters elektronisch erfaßt und mindestens eine zusätzliche Grafik in der Datenbank (31) elektronisch gespeichert wird, so daß die mindestens eine zusätzliche Grafik gemäß den Verfahrensschritten a) und/oder h) elektronisch ausgewählt werden kann, wobei die elektronisch erfaßte Dateneingabe ein Datum für eine Startzeitpunkt umfaßt, ab welchem die oder alle zusätzlichen Grafiken gemäß den Verfahrensschritten a) und/oder h) elektronisch auswählbar sind.

16. Verfahren nach Anspruch 15, dadurch **gekennzeichnet**, daß eine elektronische Registrierung des Anbieters in der Datenbank (31) durchgeführt wird, wenn bei der elektronischen Erfassung der Dateneingabe des Anbieters ermittelt wird, daß eine solche erstmalig erfolgt.

17. Verfahren nach Anspruch 15 oder 16, dadurch **gekennzeichnet**, daß eine Aufstellung der oder aller zusätzlichen Grafiken, die für den Anbieter gespeichert werden, elektronisch erzeugt und auf einem Bildschirm eines Anbieter-Computers (3) angezeigt wird.

18. Verfahren nach Anspruch 11 und einem der Ansprüche 15 bis 17, dadurch **gekennzeichnet,** daß Konfigurationsdaten, die von dem Anbieter zur automatischen Konfiguration der Bildschirmabfragemaske eingegeben werden, elektronisch erfaßt und in der Datenbank (31) elektronisch gespeichert werden.

19. Verfahren nach Anspruch 8 und einem der Ansprüche 15 bis 18, dadurch **gekennzeichnet,** daß die elektronisch erfaßte Dateneingabe den maximalen Gesamtanzeigenzählerstand umfaßt.

20. Verfahren zum automatischen Ausgeben von mehreren Multimediadatensätzen, insbesondere von Bild- und/oder Tondatensätzen, die in einer Datenbank (31) elektronisch gespeichert sind, mit Hilfe wenigstens eines Benutzer-Computers (1), der mit einem die Datenbank umfassenden Computer-Netzwerk (5) so verbunden ist, daß zwischen dem wenigstens einen Benutzer-Computer (1) und dem Computer-Netzwerk (5) Daten elektronisch ausgetauscht werden können, wobei beim Ausgeben der mehreren Multimediadatensätze jeweils mehrere Bewertungsfelder auf einem Bildschirm (20) des wenigstens einen Benutzer-Computer (1) angezeigt werden, den Bewertungsfeldern jeweils ein Zahlenwert in der Datenbank (31) elektronisch zugeordnet ist und für die mehreren Multimediadatensätze jeweils ein von mindestens einem Summenzählparameter abhängiger Summenzählstand elektronisch erfaßt und in der Datenbank (31) elektronisch gespeichert wird, das Verfahren die folgenden Verfahrensschritte umfassend:

a) elektronisches Auswählen der mehreren Multimediadatensätze aus in der Datenbank (31) elektronisch gespeicherten Multimediadatensätzen;
b) elektronisches Bestimmen einer jeweiligen Höhe des elektronisch erfaßten Summenzählstands der mehreren Multimediadatensätzen als Funktion des mindestens einen Summenzählparameters;
c) elektronisches Bestimmen einer ersten Rangfolge der mehreren Multimediadatensätze in Abhängigkeit von der jeweiligen Höhe des elektronisch bestimmten Summenzählstands der mehreren Multimediadatensätze;
d) elektronisches Bereitstellen der mehreren Multimediadatensätze entsprechend der ersten Rangfolge an dem wenigstens einen Benutzer-Computer (1), so daß die mehreren Multimediadatensätze mit Hilfe des wenigstens einen Benutzer-Computers (1) der ersten Rangfolge entsprechend elektronisch ausgegeben werden können;
e) elektronisches Ausgeben mehrerer der gemäß d) bereitgestellten Multimediadatensätze der ersten Rangfolge entsprechend;
f) elektronisches Erfassen einer Auswahl eines der Bewertungsfelder für wenigstens einen der gemäß e) ausgegebenen Multimediadatensätze durch einen Benutzer, welcher das eine der Bewertungsfelder mit Hilfe von Auswahlmittel des wenigstens einen Benutzer-Computers (1) auswählt; und
g) elektronisches Anpassen des mindestens einen Summenzählparameters für den wenigstens einen Multimediadatensatz, für den der Benutzer gemäß f) eine Auswahl getroffen hat, in Abhängigkeit von dem Zahlenwert, der dem einen gemäß f) ausgewählten Bewertungsfeld zugeordnet ist.

21. Verfahren nach Anspruch 20, die weiteren Verfahrensschritte umfassend:

h) elektronisches Auswählen weiterer Multimediadatensätze aus den in der Datenbank (31) elektronisch gespeicherten Multimediadatensätzen, wobei wenigstens ein Teil der mehreren Multimediadatensätze von den weiteren Multimediadatensätzen umfaßt ist;
i) elektronisches Bestimmen der jeweiligen Höhe des elektronisch erfaßten Summenzählstands der weiteren Multimediadatensätze als Funktion des mindestens einen Summenzählparameters;
j) elektronisches Bestimmen einer zweiten Rangfolge der weiteren Multimediadatensätze in Abhängigkeit von der jeweiligen Höhe des elektronisch erfaßten Summenzählstands der weiteren Multimediadatensätze; und
k) elektronisches Bereitstellen der weiteren Multimediadatensätze entsprechend der zweiten Rangfolge an dem wenigstens einen Benutzer-Computer (1), so daß die weiteren Multimediadatensätze mit Hilfe des wenigstens einen Benutzer-Computers (1) der zweiten Rangfolge entsprechend elektronisch ausgegeben werden können.

22. Verfahren nach Anspruch 20 oder 21, dadurch **gekennzeichnet,** daß beim elektronischen Bestimmen der jeweiligen Höhe des elektronisch erfaßten Summenzählstands der mindestens eine Summenzählparameter durch einen anderen Zählparameter (BA) elektronisch dividiert wird, wobei BA eine elektronisch erfaßte und in der Datenbank (31) elektronisch gespeicherte Anzahl von Benutzern ist, für die eine Auswahl eines Bewertungsfelds für den jeweiligen Multimediadatensatz gemäß des Verfahrensschritts f) elektronisch erfaßt wurde.

23. Verfahren nach Anspruch 20 oder 21, dadurch **gekennzeichnet**, daß beim elektronischen Bestimmen der jeweiligen Höhe des elektronisch erfaßten Summenzählstands der mindestens eine Summenzählparameter durch einen weiteren Zählparameter (DA) elektronisch dividiert wird, wobei DA eine elektronisch erfaßte und in der Datenbank (31) elektronisch gespeicherte Anzahl der Ausgaben des jeweiligen Multimediadatensatzes mit Hilfe des wenigstens einen Benutzer-Computers (1) gemäß des Verfahrensschritts e) ist.

24. Verfahren nach einem der Ansprüche 20 bis 23, dadurch **gekennzeichnet**, daß das elektronische Auswählen der mehreren bzw. der weiteren Multimediadatensätze in Abhängigkeit von in der Datenbank (31) elektronisch gespeicherten Auswahlkriterien erfolgt, insbesondere nach Sachthemen oder geografischen Kriterien.

25. Verfahren nach einem der Ansprüche 20 bis 24, wobei:

- der Verfahrensschritt f) zum elektronischen Erfassen der Auswahl des Benutzers das elektronische Speichern von Auswahldaten in der Datenbank (31) umfaßt, wobei die Auswahldaten Kenndaten des Benutzers und Kenndaten des wenigstens einen Multimediadatensatzes enthalten, für den der Benutzer gemäß f) eine Auswahl getroffen hat;

- vor dem elektronischen Anpassen des mindestens einen Summenzählparameters gemäß g) ein Verfahrensschritt zum elektronischen Überprüfen der Auswahldaten ausgeführt wird; und

- der mindestens eine Summenzählparameter des wenigstens einen Multimediadatensatzes, für den der Benutzer gemäß f) eine Auswahl eines Bewertungsfelds getroffen hat, ange-paßt wird, wenn sich beim elektronischen Überprüfen der Auswahldaten ergibt, daß der wenigstens eine Multimediadatensatz von einer früheren Auswahl eines Bewertungsfelds durch den Benutzer nicht umfaßt ist.

26. Verfahren nach einem der Ansprüche 20 bis 25, dadurch **gekennzeichnet,** daß in der Datenbank (31) für jeden der in der Datenbank (31) elektronisch gespeicherten Multimediadatensätze ein Gesamtausgabenzähler elektronisch gespeichert wird, wobei der Gesamtausgabenzähler jeweils um einen festen Wert erhöht wird, wenn der jeweilige Multimediadatensatz von den gemäß e) ausgegebenen Multimediadatensätzen umfaßt ist.

27. Verfahren nach Anspruch 26, dadurch **gekennzeichnet,** daß beim elektronischen Auswählen der mehreren Multimediadatensätze gemäß a) und/ oder beim elektronischen Auswählen der weiteren Multimediadatensätze gemäß h) die jeweiligen Gesamtausgabenzähler der mehreren bzw. der weiteren Multimediadatensätze elektronisch überprüft werden, so daß nur Multimediadatensätze ausgewählt werden, für die der jeweilige elektronisch gespeicherte Gesamtausgabenzählerstand kleiner als ein jeweiliger maximaler Gesamtausgabenzählerstand ist, der in der Datenbank (31) elektronisch gespeichert ist.

28. Verfahren nach einem der Ansprüche 20 bis 27, dadurch **gekennzeichnet**, daß für den oder alle Benutzer, die in einem vorbestimmten Zeitraum eine Auswahl eines Bewertungsfeldes gemäß e) ausführen, Kenndaten und ein Zählkonto elektronisch erfaßt und in der Datenbank (31) elektronisch gespeichert werden, wobei das Zählkonto eines bestimmten Benutzers nach Ausführung einer Auswahl eines Bewertungsfeldes gemäß e) erhöht wird, wenn die Auswahl durch den Benutzer elektronisch erfaßt wurde.

29. Verfahren nach Anspruch 28, dadurch **gekennzeichnet,** daß die Erhöhung des jeweiligen Zählkontos in Abhängigkeit von einem zeitlichen Abstand zwischen einem Zeitpunkt der Auswahl des Benutzers gemäß e) und einem Startzeitpunkt erfolgt, ab welchem das elektronische Auswählen gemäß den Verfahrensschritten a) und/oder h) erstmalig möglich ist.

30. Verfahren nach Anspruch 28 oder 29, dadurch gekennzeichnet, daß nach Ablauf des vorbestimmten Zeitraums aus den elektronisch gespeicherten Kenndaten von Benutzern, für die im Vergleich zu anderen Benutzern die Zählkonten mit den höchsten Werten in der Datenbank (31) elektronisch gespeichert sind, Kenndaten mehrerer Benutzer zufällig elektronisch ausgewählt werden.

31. Verfahren nach einem der Ansprüche 20 bis 30, dadurch **gekennzeichnet**, daß eine Dateneingabe eines Anbieters elektronisch erfaßt und mindestens ein zusätzlicher Multimediadatensatz in der Datenbank (31) elektronisch gespeichert wird, so daß der mindestens eine zusätzliche Multimediadatensatz gemäß den Verfahrensschritten a) und/oder h) elektronisch ausgewählt werden kann, wobei die elektronisch erfaßte Dateneingabe ein Datum für den Startzeitpunkt umfaßt, ab welchem die oder alle zusätzlichen Mulitmediadatensätze gemäß den Verfahrensschritten a) und/oder h) elektronisch auswählbar sind.

32. Verfahren nach Anspruch 31, dadurch **gekennzeichnet**, daß eine elektronische Registrierung des Anbieters in der Datenbank (31) durchgeführt wird, wenn bei der elektronischen Erfassung der Dateneingabe des Anbieters ermittelt wird, daß eine solche erstmalig erfolgt.

33. Verfahren nach Anspruch 31 oder 32, dadurch **gekennzeichnet,** daß eine Aufstellung der oder aller zusätzlichen Mulitmediadatensätze, die für den Anbieter gespeichert werden, elektronisch erzeugt und auf einem Bildschirm eines Anbieter-Computers (3) angezeigt wird.

34. Verfahren nach Anspruch 27 und einem der Ansprüche 31 bis 33, dadurch **gekennzeichnet,** daß die elektronisch erfaßte Dateneingabe den maximalen Gesamtausgabenzählerstand umfaßt.

35. Verfahren zum Registrieren von Benutzern eines Computer-Netzwerks, das Verfahren die folgenden Schritte aufweisend:

a) Darstellen eines elektronischen Eingabeformulars auf einem Bildschirm eines Benutzer-Computers des Computer-Netzwerks;

b) elektronisches Erfassen einer Eingabe eines Benutzers des Benutzer-Computers zum Ausfüllen des dargestellten Eingabeformulars, wobei die erfaßte Eingabe eine elektronische Adresse umfaßt;

c) Speichern der elektronisch erfaßten Eingabe des Benutzers und eines Identifizierungscodes zum Identifizieren des Benutzers in einer Datenbank des Computer-Netzwerks;

d) Versenden einer elektronischen Nachricht an die elektronische Adresse, wobei die elektronische Nachricht Informationen aus der elektronisch erfaßten Eingabe umfaßt; und

e) automatisches Anpassen eines Zählparameters, welcher in der Datenbank gespeichert ist und dem Benutzer zugeordnet ist, wobei der Zählparameter angepaßt wird, nachdem in der Datenbank eine Registrierung eines weiteren Benutzers gespeichert wurde und falls bei der Registrierung die elektronische Adresse zur Identifizierung des weiteren Benutzers elektronisch erfaßt wurde.

**36.** Verfahren nach Anspruch 35, dadurch **gekennzeichnet**, daß der Zählparameter in der Datenbank als eine Gutschrift für den Benutzer gespeichert wird, wobei die Gutschrift nach der Registrierung des weiteren Benutzers erhöht wird.

**37.** Verfahren nach Anspruch 35 oder 36, dadurch **gekennzeichnet**, daß der elektronischen Nachricht ein in der Datenbank erzeugtes Paßwort beigefügt wird, und das Paßwort bei der Registrierung des weiteren Benutzers elektronisch erfaßt wird.

Fig. 1

Fig. 2

EP 1 103 907 A2

Fig. 3

Start (40)

Identifizierung (41)

Überprüfung ? (43)

Nein

Ja

Nein

Ja

Login (42)

Registrierung und Quiz (46)

Quiz - Fragen anzeigen (47)

Eingabe (48)

Auswertung der Antworten (49)

Behandlung bereits registrierter Teilnehmer (44)

Ende/zurück zum Hauptmodul (45)

Datenbank (31)

Fig. 4

EP 1 103 907 A2

Start — 50

51

Aufforderung zur Identifikation

52

Login

Loginnamen und
Passwort prüfen

Login
gescheitert

53

Registrierung für neue Sponsoren

Ende/zurück zum Hauptmodul

Login erfolgreich

Informationsgrafik - Verwaltung

Informationsgrafik
löschen

Informationsgrafik
einrichten/bearbeiten

54

56

57

55

31

Informationsgrafik +
Optionen anzeigen

Datenbank

Fig. 5

Fig. 6

Start

70 — Identifizierung? Teilnahmebedingungen?

71 — Login für Teilnehmer

Nein

Ja

Ende/zurück zum Hauptmodul

73 — Informationsgrafik - Verwalter

76 — Informationsgrafik löschen

75 — Informationsgrafik anzeigen

74 — Informationsgrafik einrichten/bearbeiten

31 — Datenbank

Fig. 7